# EUROPÄISCHE PATENTSCHRIFT

(11) **EP 1 277 266 B1**
(45) Veröffentlichungstag und Bekanntmachung des Hinweises auf die Patenterteilung: **18.07.2007**
(21) Anmeldenummer: 01919162.6
(22) Anmeldetag: 02.03.2001
(51) Int. Cl.: H02J 3/00, G06F 17/50

(54) **VERFAHREN ZUR PROJEKTIERUNG EINER ELEKTRISCHEN ANLAGE UND PROJEKTIERUNGSVORRICHTUNG**
METHOD FOR CONFIGURING AN ELECTRICAL INSTALLATION AND CORRESPONDING CONFIGURATION DEVICE
PROCEDE D'ETUDE D'UNE INSTALLATION ELECTRIQUE ET DISPOSITIF D'ETUDE ASSOCIE

(30) Priorität: 17.03.2000 DE 10013037
(43) Veröffentlichungstag der Anmeldung: 22.01.2003
(73) Patentinhaber: SIEMENS AKTIENGESELLSCHAFT, 80333 München (DE)
(72) Erfinder: STUTZER, Thomas-Michael, 91058 Erlangen (DE); PANTENBURG, Norbert, 90469 Nürnberg (DE)
(86) Internationale Anmeldenummer: PCT/DE2001/000795
(87) Internationale Veröffentlichungsnummer: WO 2001/069751

(56) Entgegenhaltungen:
- DE-A- 4 209 168

## Beschreibung

Die Erfindung betrifft ein Verfahren zur Projektierung einer elektrischen Anlage mit einem Netz, das von einer Einspeisüngsseite zu einer Verbraucherseite reicht. Die Erfindung betrifft weiter eine Projektierungsvorrichtung zur Durchführung des Verfahrens.

Aus der DE 42 09 168 C2 ist ein rechnergestütztes Projektierungsverfahren bekannt, das zur Projektierung einer Automatisierungseinrichtung für eine Schaltanlage dient. Das dort beschriebene Verfahren umfasst alle im Zusammenhang mit der Planung und der Stellung der Automatisierungseinrichtung in Verbindung stehende Schritte. Hierzu gehören beispielsweise die Projektierung, die Parametrierung; das Erstellen von Dokumentationsunterlagen, die Parametrierung der Fernwirkstelle, die Generierung von Betriebsdaten für die Automatisierungseinrichtung und die Erstellung.von technischen Unterlagen, Stromlaufplänen, Bildschirmaufbauten, Gerätelisten, Preise, und sonstige technische Daten.

Dabei wird, ausgehend von einem modularen Programm, basierend auf einem Datenpool von Informationen bezüglich Standardschaltungen und Standardgeräten, ein Modell der zu projektierenden Anlage erstellt. Eine Einbindung der zu steuernden Schaltanlage oder Primäranlage ist nicht berücksichtigt.

Bei der Projektierung einer elektrischen Anlage, beispielsweise für die elektrische Energieversorgung eines Gebäudes, sind viele Arbeitsschritte erforderlich. Dabei ist es besonders problematisch, die jeweiligen Betriebsmittel in Hinblick auf unterschiedliche Auslegungsmöglichkeiten, Vorschriften und sonstige Randbedingungen optimiert auszuwählen. Ein einfacher Auswahlmodus genügt nicht.

Der Erfindung liegt die Aufgabe zugrunde, ein automatisiertes Verfahren zur Verfügung zu stellen, das unter Berücksichtigung aller für die Projektierung nötigen Rechenregeln die Ermittelung und Visualisierung eines Netzbildes erlaubt, wobei auch unversierte Personen die Projektierung durchführen können. Weiterhin soll eine Einrichtung zur Durchführung des Verfahrens bereitgestellt werden.

Die Lösung der Aufgabe gelingt erfindungsgemäß mit einem Verfahren zur Projektierung einer elektrischen Anlage mit einem Netz, das von einer Einspeisungsseite zu einer Verbraucherseite reicht, wobei ein Netzbild ermittelt wird entweder durch
- Ermitteln eines Einspeisestromkreises anhand von Vorgaben für elektrische Mittel, der zur Verfügung stehenden Leistung und der Stromkreislänge und durch
- Ermitteln eines Verbraucherstromkreises anhand von Vorgaben für vorgesehene Last und der Stromkreislänge oder durch
- Ermitteln eines Verbraucherstromkreises anhand von Vorgaben für vorgesehene Last und der Stromkreislänge und durch
- Ermitteln eines Einspeisekreises anhand der Stromkreislänge und anhand von Ergebnissen aus Algorithmen und den Vorgaben zum Verbraucherstromkreis,
- wobei jeweils Einspeisestromkreis und Verbraucherstromkreis an einer virtuellen Schnittstelle gekoppelt sind.

Auf diese Weise ist eine Struktur vorgegeben, die den Aufbau eines einfachen Netzbildes mit Standardelementen ermöglicht. Ausgangsgedanke dabei ist es, dass das Netz auf seine wesentlichen Elemente, nämlich Erzeuger und Verbraucher, reduziert wird.

Es ist günstig, wenn sich an der virtuellen Schnittstelle eine Unterverteilung zwischenschalten lässt, wobei zu den Vorgaben bzw. zu den Ergebnissen zum Einspeisestromkreis eine Eingabe für die Stromkreislänge der Unterverteilung vorgesehen ist. Somit ist die Nachbildung jedes beliebigen Netzes mit einfachen Mitteln möglich.

Mit Vorteil wird bei dem Verfahren derart vorgegangen, dass zu jedem Stromkreis, auch zu parallelen Zweigen im Einspeisestromkreis und bzw. oder im Verbraucherstromkreis, ausgehend von der Summe der Lasten bis zum betrachteten Stromkreis durchgeführt wird:
a) - Die Ermittlung von Einrichtungen und/oder Schutzmaßnahmen zur Gewinnung von Überlastungssicherheit anhand der Summenlast und vorgegebener Tabellen und Algorithmen sowie anhand von Auswahltabellen zur Bestimmung geeigneter Geräte;
b) - die Ermittlung von Einrichtungen und/oder Schutzmaßnahmen zur Gewinnung von Kurzschluss-Schutz zu Kurzschluss-Strömen, die zum Ergebnis nach a) anhand von Algorithmen gewonnen werden;
c) - die Ermittlung von Einrichtungen und/oder Maßnahmen zum Schutz von Lebewesen gegen den elektrischen Schlag bei indirektem Berühren anhand von Ergebnissen von a) und b) und anhand von Tabellen und bzw. von Algorithmen,
d) - die Ermittlung von Leistungsquerschnitt und/oder von parallelen Leitern anhand der Bewertung von Leitungslänge anhand der Ergebnisse nach a) bis c) von einer betrachteten Leitungsstelle bis zu einer betrachteten Last unter dem Betrachtungsmaßstab, dass an der Last aufgrund des Spannungsfalls eine Spannung für ordnungsgemäßen Betrieb der Last ansteht,
e) - für den Fall, dass zwei oder mehr Schutzeinrichtungen in Reihe vorgesehen sind, die Ermittlung von Einrichtungen, die selektives Verhalten zueinander aufweisen, anhand der Ergebnisse nach a) bis d) und anhand von Auswahltabellen, falls die Schutzschalteinrichtungen den Selektivitäts-Anforderungen nicht genügt haben,
f) - Erzeugen des Netzbildes anhand der kumulierten Ergebnisse nach a) bis e).

Damit sind alle wesentlichen Bemessungsvorschriften und Randbedingungen konsequent und einheitlich, aufeinander aufbauend automatisch berücksichtigt und optimiert erfüllt.

Dabei ist von Vorteil, wenn zu zwei oder mehr parallel angeordneten Schutzeinrichtungen in Reihe zu vor- oder nachgeschalteten Schutzeinrichtungen eine Hüllkurve um die Auslösekurven der parallel angeordneten Schutzeinrichtungen erzeugt wird und diese Kurven visualisiert werden. Damit ist eine anschauliche Darstellung gegeben, die dem Bediener eine optimale visuelle Kontrolle erlaubt. Dabei können anhand vorgebbarer Werte Einstellparameter der Schutzeinrichtungen verändert und die resultierenden Auslösekurven online visualisiert werden. Kleine Korrekturen können sofort anwenderfreundlich - auch ohne umfangreichem Fachwissen - durchgeführt werden

Die Einstellparameter der Schutzeinrichtungen können an einer Schnittstelle für eine Ausgabe an die jeweiligen Schutzgeräte bereitgestellt werden. Damit ist ein direkter Datenaustausch möglich, so dass sich Zusatzparametrierungen oder - einstellungen erübrigen.

Mit Vorteil wird das Netzbild nach Art einer Baumstruktur visualisiert, die allgemein aus Dateidarstellungen an PCs bekannt ist. Damit erhält der Anwender eine allgemein bekannte Darstellung, die er bereits gewohnt und so die Einarbeitung vereinfacht ist.

Mit Vorteil wird derart verfahren, dass zur Gewinnung von Gehäusen von Unterverteilungen zur Aufnahme ermittelter Geräte und Einrichtungen aufgeteilt wird, in den Raum für
- Hauptanschluss-Schienen,
- Zubehör (Messgeräte, Schaltplantaschen),
- Funktionsbausteine zu jedem verwendbaren Gerät, im wesentlichen bestehend aus einem Einbausatz, um ein spezielles Gerät einbauen zu können, aus Klemmen und erforderlichenfalls aus Zwischenschienen und
- für das Gehäuse.

Anschließend kann dabei zu ermittelten Geräten und Einrichtungen mit Vorteil eine Aufteilung des zugeordnet ermittelten Raumes auf sogenannte Felder in Gestalt von Verteilungen oder Schaltschränken erfolgen. Somit ist auch die gesamte räumliche Projektierung der Anlage unter Berücksichtigung von umfangreichen Randbedingungen, z.B. Schrankäusmaße und Wärmebedarf, automatisch durchgeführt.

Weiterhin ist erfindungsgemäß eine Projektierungsvorrichtung zur Durchführung des oben genannten Verfahrens vorgesehen, mit einem Rechner, einem Bildschirm, einer Tastatur und ggf. einer Schnittstelle, und einem Speicher, in welchem eine Vielzahl von virtuellen Einrichtungen, Geräten und Schutzeinrichtungen in Tabellen mit ihren Kenndaten gespeichert sind, und einem Generator, welcher aus den ermittelten Einrichtungen, Geräten und Schutzeinrichtungen das Netzbild erzeugt. Die oben genannten und nachfolgenden Vorteile des Verfahrens gelten für die Projektierungsvorrichtung sinngemäß.

Ausführungsbeispiele der Erfindung, weitere Vorteile und Details, werden nachfolgend anhand der Zeichnung näher erläutert. Es zeigen:
FIG 1 Standardelemente für den Aufbau eines Netzbildes,
FIG 2 eine Bildschirmdarstellung eines Netzbildes,
FIG 3 ein Bildschirmbild für einen Verbraucherstromkreis,
FIG 4 ein Bildschirmbild für ein Kabel,
FIG 5 eine Darstellung zur Gehäusebestimmung und
FIG 6 und 7 Bildschirmdarstellungen für Auslösekennlinien.

Ziel des Projektierungsverfahrens ist es, die Projektierung der elektrischen Energieversorgung für Gebäude durchgängig von der Gebäudeeinspeisung bis zum Endverbraucher entsprechend den derzeit gültigen Normen und Bestimmungen landesspezifisch schnell und automatisch (mit Hilfe eines PC) ohne spezielles Fach- und Gerätewissen durchzuführen. Dabei wird auf konkrete lieferbare Produkte zurückgegriffen.

Das Verfahren kann als Software oder als Programm auch einem PC oder einer Workstation eingerichtet sein, wobei die Bedienung mit den üblichen Anzeige- und Bedienmittel erfolgt: Bildschirm, Tastatur und Maus. Ggf. sind auch weitere übliche Zusatzeinrichtungen, z.B. ein Drucker oder ein Plotter zur Ausgabe von Informationen vorhanden.

Die Projektierung der elektrischen Energieversorgung für ein Gebäude erfordert viele Arbeitsschritte, insbesondere die folgenden:
1. Konzepterstellung (abhängig von der Gebäudeart)
2. Auswahl der Betriebsmittel wie Schalt- und Schutzgeräte, Kabel, Transformatoren usw.
3. Festlegen der Eigenschaften für die Errichtung wie Verlegebedingungen für Kabel und Leitungen, Zuordnen von Schutzgeräten zu Betriebsmittel, Auswahl der errichtungsort-abhängigen Vorschriften und Bestimmungen usw.
4. Berechnen von Lastverteilung, Kurzschluss-Strömen, Spannungsfall usw. nach den anerkannten Regel der Technik sowie Erstellung eines Selektivitätsnachweises.
5. Überprüfen, ob alle länderspezifischen Errichtungs- und Bau-Vorschriften erfüllt sind.

Diese Schritte erfordern einen hohen Zeitaufwand. Der Projektierungsvorgang ist unübersichtlich da sich die einzelnen Schritte und Einflussparameter gegenseitig beeinflussen. Dies wird auch dadurch dokumentiert, dass sich die internationalen Gremien bis heute auf kein gemeinsames Verfahren in der Vorgehensweise einigen konnten.

Bisher wird bei der Projektierung in der Regel auf vorhandene Anlagen oder auf Anlagenteile von ausgeführten Projekte zurückgegriffen. Hierzu werden typische Ausführungsbeispiele in Papierform oder in Form von EXCEL- bzw. ACCESS - Tabellen gespeichert und ausgewertet.

Dies führt entweder zu einem hohen Zeitaufwand oder zu unwirtschaftlich dimensionierten Anlagen, da alte ausgeführte Anlage und neues Projekt selten übereinstimmen. Außerdem kann eine solche Projektierung nur von Spezialisten vorgenommen werden.

Die allgemein gültigen Rechenregeln für Kurzschluss, Lastfluss, Spannungsfall (siehe auch nachfolgende Ausführungen zum Projektierungsverfahren) werden als Rechenkernel im Sinne von Standardberechnungen oder -formeln hinterlegt. Die Projektierungsregeln sind in Abhängigkeit von den Stromkreisarten und den Projektierungsbedingungen als Methoden hinterlegt.

Über Default-Einstellungen können sowohl die Parameter für die Methoden als auch für die Rechenkernel an landespezifische oder nutzerspezifische Anforderungen angepasst werden. Durch länder- oder nutzerabhängige Grundeinstellungen kann somit über ein Expertensystem eine wirtschaftliche Projektierung, angepasst an die Anforderungen des Nutzers oder der Gebäudeart, erfolgen ohne das vom Nutzer Spezial-Fachwissen notwendig ist. Die Projektierung erfolgt automatisch in kürzester Zeit.

Bei Bedarf ist durch eine Änderung der Default-Werte oder Änderung einzelner Betriebmittel das Projektierungsverfahren an spezielle Anforderungen von Fachleuten oder von Gebäudearten anpassbar. Der Nutzer kann sowohl top-down, d.h. ausgehend von der Einspeisung hin zu den einzelnen Verbrauchern, als auch bottom-up, d.h. Erstellen einer Energiebilanz ausgehend von den Verbrauchern hin zur Einspeisung, projektieren.

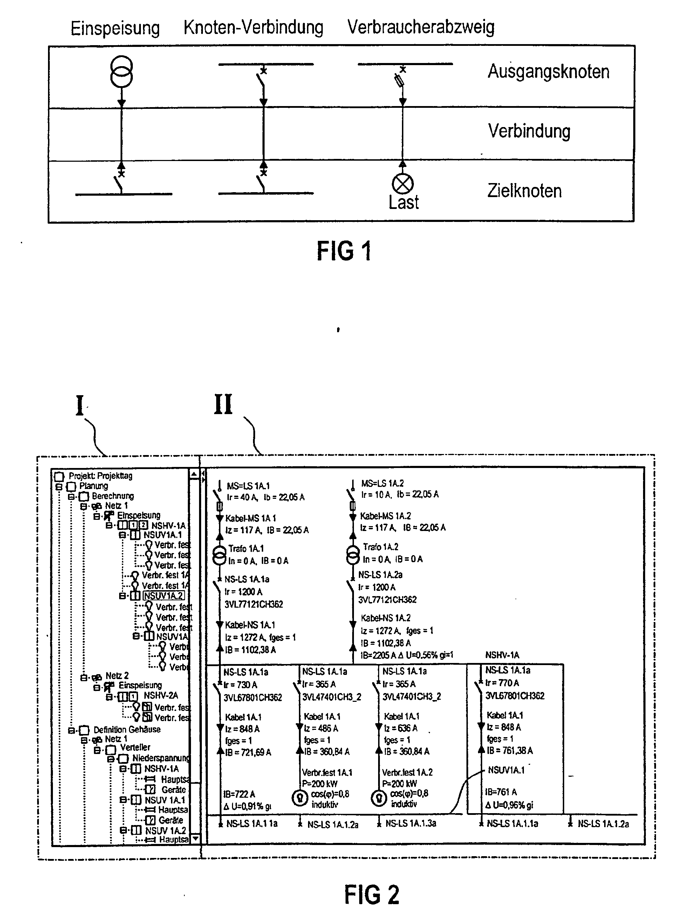

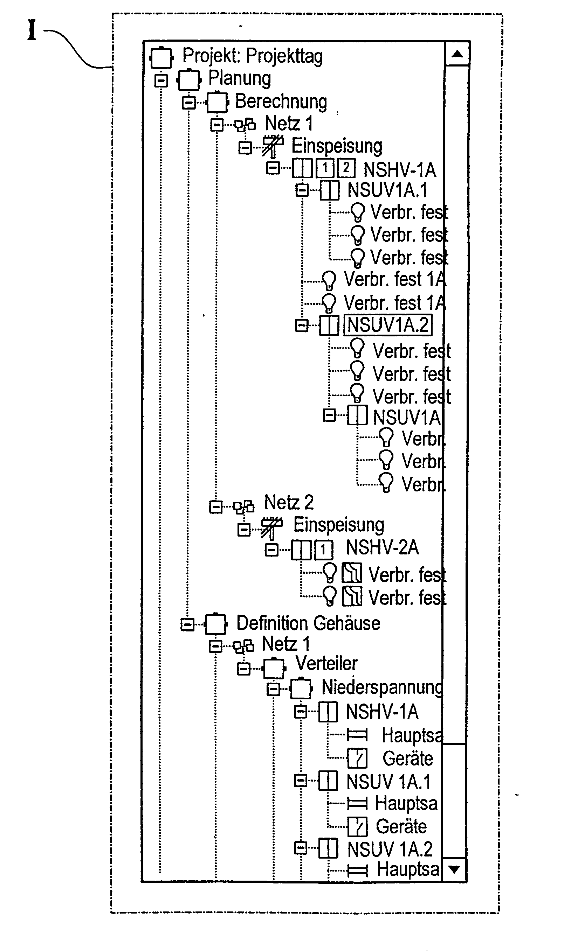

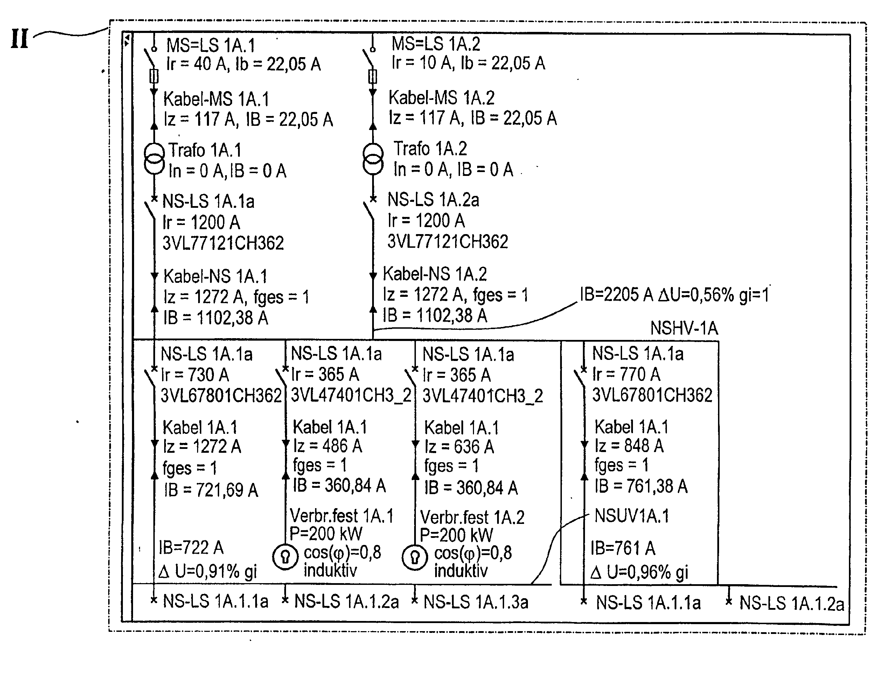

### Strukturiertes Vorgehen (FIG 1)

Damit auch unerfahrene Nutzer schnell zu einem wirtschaftlichen und technisch richtigen Ergebnis kommen können wurde eine Strukturierung für das Vorgehen vorgenommen. Ziel ist wenige, immer gleichartige Bedienschritte zu erreichen. Siehe hierzu FIG 1. Es wurden die folgenden Strukturen, Standardnetzelemente oder auch Grundelemente definiert:
Einspeisung, Knotenverbindung und Verbraucherabzweig.

Diese können jeweils nach einem gleichen Schema behandelt werden:
1. Definition des Ausgangsknotens (Einspeisung, Verteilung).
   Dies wird größtenteils aus den vorherigen Schritten übernommen.
2. Definition des Zielknotens (Verteilung, Last)
3. Berechnung und Dimensionierung der Verbindung (Schutzfunktion, Kabel/Schiene).

Darüber hinaus wird eine Strukturierung für die Bedienung vorgenommen:
1. Anzeige und Eingabe nur der unbedingt notwendigen Parameter (Default-Einstellungen)
2. Bei Bedarf detaillierte Angaben über weitere Masken.

### Struktur der Bedienoberfläche (FIG 2)

Die Oberfläche ist in mehrere Bereiche aufgeteilt.
a. Strangschema des Versorgungsnetzes als Baumstruktur (linke Bildseite) mit Hauptverteiler, Unterverteiler, Verbraucher
b. Darstellungsfläche(rechte Bildseite oben). Anzeige in Abhängigkeit von der Bearbeitung
   - Stromkreis-Dimensionierung
      → Darstellung des einpoligen Netzbildes mit technischen Daten der Betriebmittel oder Ergebnissen der Lastverteilung/Kurzschlussberechnung
   - Selektivitätsbetrachtung
      → Darstellung der Stromzeitkennlinien mit Einstellelementen der Schutzeinrichtung und Grenzwerten
   - Gehäusebestimmung
      → Ansichtszeichnungen, Feldzuordnung, Abmessungen usw.
c. Meldeleiste (rechte Bildseite unten). mit Darstellung von Fehlermeldungen, Dimensionierungsregeln, Bedienungshinweisen

Aus allen drei Fenstern des Bildaufbaus kann das Verfahren bedient werden.

In der Baumstruktur (linker Bildteil) werden neben dem Strangschema des Netzes die Ergebnisse der Überprüfungsfunktion für Überlastschutz, Kurzschlussschutz, zulässiger Spannungsfall, Schutz gegen elektrischen Schlag und Selektivität durch Symbole und Farben in Realzeit, also zur Laufzeit des Programms, bei jeder Änderungen angezeigt. Der Nutzer sieht sofort die Auswirkungen seiner Änderungen.

### Strukturierung der Bedienung

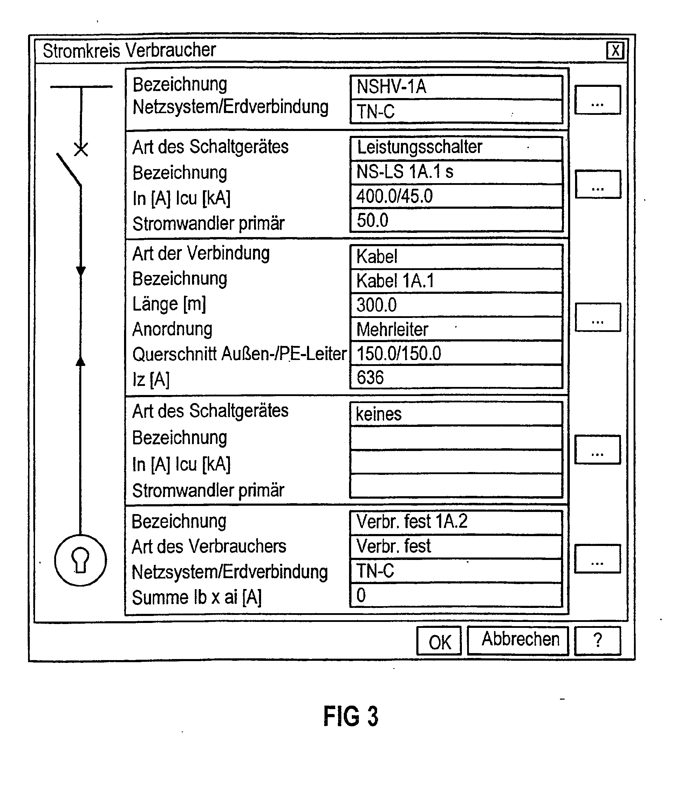

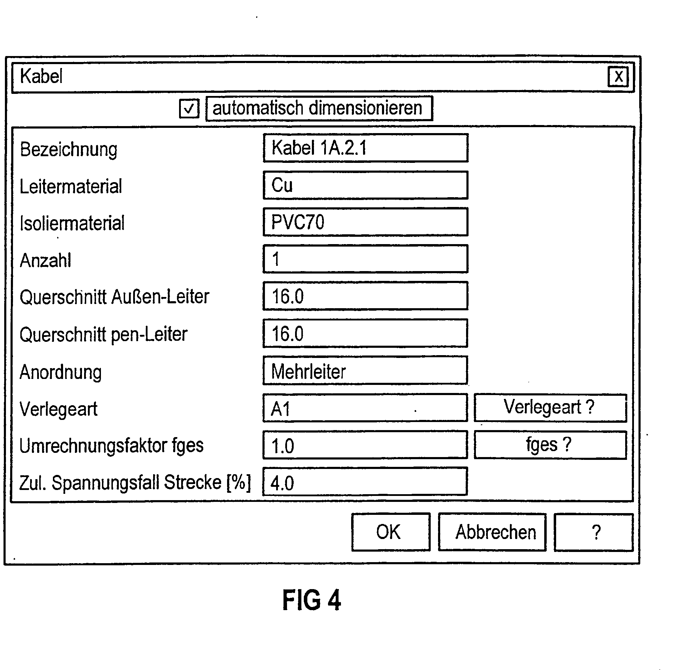

Die Eigenschaften, die ein Betriebsmittel beschreiben, sind strukturiert in drei Ebenen ansehbar bzw. änderbar:
- Ebene 1: Eigenschaften Betriebsmittel im Netzübersichtsbild entsprechend FIG 2,
   z.B Kabel - Kabellänge
   - Anzahl paralleler Systeme
   - Querschnitt Hauptleiter
   - Querschnitt N-Leiter
   - Querschnitt PE-Leiter
   - Bezeichnung
   z.B. Schalter - Bezeichnung
   - Bemessungsstrom
   - Typ
- Ebene 2: Eigenschaften Dialogfeld Stromkreis (siehe Beispiel Fig 3)
   Das Dialogfeld Stromkreis enthält zu jedem Betriebsmittel im Stromkreis die wichtigsten Eigenschaften des Betriebsmittels zum Ansehen und Ändern.
   z.B. Art der Verbindung
   - Kabel
   - Länge
   - Anordnung
   - Querschnitt:
      Außen-, N-, PE-Leiter
   - Iz zulässiger Belastungsstrom
   - Bezeichnung
   z.B. Art des Schaltgerätes
   - Leistungsschalter
   - Bemessungsstrom/ Kurzschlußschaltvermögen
   - Art des Schutzgerätes
- Ebene 3: Eigenschaften Detail-Dialog Betriebsmittel (siehe Beispiel FIG 4)
   Das Detail-Dialogfeld Betriebsmittel enthält alle Eigenschaften die das Betriebsmittel beschreiben. Alle Werte können geändert werden. Gleichzeitig können diese für ein bestimmtes Betriebsmittel aus der Datenbank bestimmt werden:
   z.B. Art der Verbindung
   - Leitermaterial
   - Isoliermaterial
   - Anzahl parallele Systeme
   - Querschnitt Außen-Leiter
   - Querschnitt pen -Leiter
   - Anordnung der Leiter
   - Verlegeart
   - Reduktionsfaktoren
   - zulässige Spannungsfall der Strecke
   - Bezeichnung

Da die Eigenschaftsfelder der Betriebsmittel im Expertensystem durch veränderbare Default-Werte vorbelegt werden, müssen nur in einer geringen Anzahl von Stromkreisen in den einzelnen Ebenen die Eigenschaften geändert werden. Durch die Aufteilung in Ebenen werden die Darstellungen übersichtlich (ein Leistungsschalter hat mehr als 17 Eigenschaftswerte) und der Zeitaufwand für die Bedienung erheblich reduziert.

Ein wesentlicher Vorteil des Projektierungsverfahrens liegt in der Strukturierung des Vorgehens und der Bedienung, in der Aufbereitung der Struktur der Eigenschaften der in der Gebäudetechnik verwendeten Betriebsmittel sowie in der Entwicklung einer geeigneten Software-Struktur für die Bedienung des Dimensionierungstools, um in möglichst kurzer Zeit zu einem Ergebnis zu kommen .

Für die Projektierung bzw. die Bestimmung der Komponenten einer Gebäudestromversorgung soll durch das Projektierungsverfahren mit einer Softwarekomponente oder Softbausteinen (Rechenkernel) folgendes gewährleistet werden:
- Bemessung der notwendigen Betriebsmittel für die elektrische Stromversorgung in Gebäuden wie
   - Schalt- und Schutzgeräte
   - Kabel, Leitungen, Stromschienen usw.
   - Transformatoren, Generatoren
   - usw.
      nach den anerkannten Regel der Technik (Bauvorschriften, Errichtungs-Bestimmungen, usw.)
- Auswahl der Betriebsmittel mit ihren für die Bestimmung und die Auswahl relevanten Eigenschaften aus einer Datenbank
- Überprüfung
   - des Überlast- und Kurzschlussschutzes
   - des Schutzes gegen elektrischen Schlags bei indirektem Berühren (Personenschutz)
   - des höchstzulässigen Spannungsfalls.

Das Verfahren soll einerseits schnell ohne spezielles Fachwissen zu eindeutigen wirtschaftliche realisierbaren Lösungen führen (Expertensystem) andererseits aber die speziellen Projektierungsgewohnheiten der Nutzer länderspezifisch zulassen.

Bisher wurde aufgrund von Erfahrungswerten aus ausgeführten Projekten das Versorgungskonzept grob erstellt. Entweder von Hand oder mit Netzberechnungsprogrammen wurden die Belastungsströme, der Spannungsfall und die Kurzschluss-Strombelastung berechnet. Aus Katalogen der Geräte- und System-Hersteller wurden anschließend die Betriebsmittel ausgewählt und ihre Zulässigkeit überprüft.

Dies ist einerseits zeitaufwendig durch die wiederholte Eingabe von Daten, durch Medienbruch zwischen den einzelnen Verfahren andererseits besteht die Gefahr von Auslegungs-Fehlern durch Übertragungsfehler.

### Struktur der elektrischen Stromversorgung

Das Stromversorgungsnetz eines Gebäudes wird in Klassen, Unterklassen und daran angebundene Eigenschaften und Methoden unterteilt.

### Beispiele:

a. Klasse Stromkreise:
   - Einspeisung
   - Verteilung
   - Endstromkreise
a.1 Unterklasse Einspeisung
   - Trafoeinspeisung
   - Generatoreinspeisung
   - Einspeisung
a.2 Unterklasse Endstromkreise
   - Endstromkreis mit Motoren
   - Endstromkreis mit Kondensatoren
   - Endstromkreis mit Steckdosen
   - Endstromkreis mit Leuchten
a.1.1 Unterklasse Trafoeinspeisung z.B.
   - Mittelspannungsfeld
   - Mittelspannungskabel
   - Transformator
   - Trafoschalter
   - Niederspannungskabel
   - Einspeiseschalter Verteiler
a.1.1.1 Eigenschaften Trafo
   - Bemessungsleistung
   - Bauart
   - Bemessungskurzschlussspannung
   - Verlustleistung
   - Übersetzungsverhältnis
   - usw.
a.1.1.1 Methoden
   - Hierzu zählen die Verfahren nach 1.1.2

   Hierzu werden die Standardelemente gemäss FIG 1 verwendet. Einzelne Projektierungsschritte, Berechnungsmethoden und Eigenschaften lassen sich so eindeutig zuordnen. Über landespezifische und nutzerbestimmte Default-Werte lassen sich technische Daten für die Projektierung und die Auswahl der Betriebsmittel in Abhängigkeit von der Klasse vorbestimmen.
   Vorgehen bei der Berechnung durch das Projektierungsprogramm/Tool:

Um die Berechnungsschleifen für die Durchführung der Projektierung auf das unbedingt erforderliche Maß zu reduzieren wurden folgende Projektierungsreihenfolge festgelegt:
1. Projektierung des Überlastschutzes
2. Projektierung des Kurzschlussschutzes
3. Projektierung des Schutzes gegen elektrischen Schlag
4. Projektierung des Spannungsfalls
5. Projektierung des selektiven Verhaltens der Schutzeinrichtung (s. Punkt 3)

Diese spezielle Vorgehensweise führt zu einer "Vorwärts -Projektierung" die beispielsweise grundsätzlich nur zu höheren erforderlichen Kabel- bzw. Leitungsquerschnitten führt. Dadurch werden unnötige Schleifen in der Projektierung vermieden und es ergibt sich grundsätzlich die wirtschaftlich günstigste Lösung.

Den einzelnen Projektierungsschritten liegen die derzeit gültigen anerkannten Regel der Technik zugrunde. Durch länderspezifische Einstellungen können landesübliche Fußnoten in den Projektierungsregeln berücksichtigt werden.

### Art der Berechnung

Die einzelnen Stromkreisklassen werden nach den anerkannten Regeln der Technik wie nationalen und internationalen Vorschriften, Bestimmungen und Errichtungsbestimmungen dimensioniert. Die erforderlichen Betriebsmittel wie Schaltgeräte, Kabel usw. werden nach einem Expertensystem auf Grundlage von Default-Werten, die an die Anforderungen des jeweiligen Planers anpassbar sind, sowie Auswahlregel für die Betriebsmittel (Fuzzy-Logik) bestimmt. Dies führt mit minimalem Zeitaufwand zu realisierbaren Lösungen. Bei Bedarf kann über manuelle Einstellung jeder Stromkreis an die Vorstellungen des Nutzers der Software angepasst werden. Die persönlichen Ausführungswünsche des Nutzes können somit ebenfalls berücksichtigt werden.

Damit nur lieferbare Produkte bei der Dimensionierung berücksichtigt werden, wird auf eine Datenbank zurückgegriffen in der alle Produkte mit den für ein automatisches Programm notwendigen Eigenschaften hinterlegt sind. Hierzu werden drei Dimensionierungsverfahren zur Verfügung gestellt:
a. Energiebilanz
   Der Leistungsbedarf für ein Gebäude wird grundsätzlich nach der *"*bottom-up*"*-Methode, d.h. vom Endverbraucher zur Einspeisung eines Gebäudes durchgeführt. Um hier sehr schnell zu einer Energiebilanz für ein Gebäude zu kommen, kann die Versorgungsstruktur eines Gebäudes mit den für die Energiebilanz wichtigen Daten wie Wirkleistung Blindleistung, Polzahl, Bemessungsspannung, Gleichzeitigkeitsfaktor (Verteiler) oder Ausnutzungsfaktor (Verbraucher) eingegeben bzw. die voreingestellten Default-Werte geändert werden. Die Energiebilanz wird dann in Realzeit also zur Laufzeit des Programms bei Änderungen und Eingaben durchgeführt. Die Eingabe bzw. Ergänzung von Schalt- und Schutzfunktionen oder der Übertragungsstrecken erfolgt nicht. Dies kann zu einem späteren Zeitpunkt nachprojektiert werden
   (s. Pkt b oder c)
b. Automatisches Dimensionieren
   Als Default-Wert steht das Programm auf "automatisches Dimensionieren". Dies bedeutet, nach Eingabe der Versorgungsaufgabe dimensioniert das Programm selbständig die benötigten Schalt- und Schutzgeräte, die benötigten Kabel- bzw. Schienenverbindungen nach der Methode "top-down" (von der Einspeisung zum Verbraucher). Die Betriebsmittel werden mit der vom Stromkreis und seinen Eigenschaften abhängigen Auswahlmethode aus der Datenbank ausgewählt.
   Automatisch, parallel zur Laufzeit wird bei jeder Eingabe bzw. Änderung eine Energiebilanz nach Pkt. a, eine Lastverteilungsberechnung und eine Kurzschlussberechnung sowohl für die max. als auch die minimalen Kurzschlussbelastungen erstellt.
   Mit dem Überprüfungsbaustein werden die 5 Bedingungen für den vorschriftengerechten Aufbau des Stromkreises überprüft. Das Ergebnis wird in der Baumstruktur des Netzes dargestellt (grün = Überprüfung in Ordnung; rot = mindestes eine Überprüfung ist nicht in Ordnung oder die Dimensionierung ist fehlgeschlagen, weil z.B. kein geeignetes Schutzgerät bestimmt werden konnte).
c. Nichtautomatisches Dimensionieren
   Ändert der Nutzer eine Eigenschaft des Betriebsmittels bzw. bestimmt aus der Datenbank ein neues Betriebsmittel mit neuen Eigenschaften wird für dieses Betriebsmittel automatisch von "automatisches Dimensionieren" auf "Dimensionierung von Hand" geschaltet (blaue Hand beim entsprechenden Knoten Verteiler, Einspeisung Verbraucher in der Baumstruktur bzw. im Stromkreisdialogfeld beim Betriebmittel).
   In diesem Fall wird kein neues Betriebsmittel bestimmt sondern die Berechnung und Überprüfung mit dem vom Nutzer eingestellten Betriebsmittel nach der Methode top-down (von der Einspeisung zum Verbraucher) durchgeführt. Die Ergebnisdarstellung - alle Bedingungen erfüllt oder nichterfüllt - wird in der Baumstruktur wie bei Pkt. b dargestellt.

Aufgabe des Programms ist es, in kürzester Zeit automatisch eine wirtschaftliche Anlage zu dimensionieren und die benötigten Betriebsmittel auszuwählen. Aus diesem Grund werden im Berechnungsverfahren Herstellerangaben, die zu wirtschaftlicheren Dimensionierung von Betriebsmittel führen, ausgewertet. Hierzu zählt z.B. die strombegrenzende Wirkung von strombegrenzenden Leistungsschaltern, Leitungsschutzschaltern und Sicherungen bei Kurzschlussströmen. Hierzu wurden die Durchlass-Energiekennlinien sowie die Durchlass-Stromkennlinien dieser Betriebsmittel digitalisiert und in der Datenbank nach einem speziellen Verfahren abgelegt.

Diese Maßnahme führt zu einer wirtschaftlichern Auslegung der Betriebsmittel insbesondere bei Kabel- und Leitungen und damit zu einer wesentlichen Verringerung der Brandlast im Gebäude durch die Reduzierung der Kabelisolation (z.B. PVC) bei Verlegung von kleineren Kabelquerschnitten.

Der Spannungsfall auf den einzelnen Stromkreisen wird nach den derzeit gültigen Regel der Technik berechnet. Für eine praxisnahe Anpassung der Berechnungsergebnisse ist es möglich die Betriebsmitteltemperatur an die tatsächlichen Verhältnisse anzupassen.

Ein weiterer Vorteil der vorliegenden Idee liegt in der erfolgten Entwicklung geeigneter Software-Algorithmen zur Abbildung der einzelnen Stromkreisklassen, Betriebsmittelklassen, deren Eigenschaften, der Berechnungs- und Auslegungsmethoden für strangförmige Energieversorgungssysteme sowie deren Zusammenstellung in Abhängigkeit von den bestehenden Normen und Errichtungsbestimmungen. Des weiteren ist die Art der Datenhaltung für die Betriebmittel, die Aufbereitung bzw. Digitalisierung der Auslösekennlinien, der Durchlass-Energiekennlinien, der Durchlass-Strom-Kennlinien der Schalt- und Schutzgeräte, wie offene Leistungsschalter, strombegrenzende Leistungsschalter, Leitungsschutzschalter, Sicherungen, Sicherungslastrennschalter, FI-Schutzschalter usw. sowie die Aufbereitung der Strombelastbarkeitstabellen und Impedanztabellen als erfinderischer Schritt anzusehen.
Nur die spezielle Form der Datenaufbereitung sowie die entwickelten Software-Algorithmen gewährleisten
a. eine Trennung von Datenhaltung und Programm
b. eine wirtschaftlich günstig realisierbare Lösung
für die elektrische Energieversorgung in Gebäuden. Beides führt zu einer erheblichen Verkürzung der aufzuwendenden Projektierungszeit und zur Vermeidung von Projektierungsfehlern.

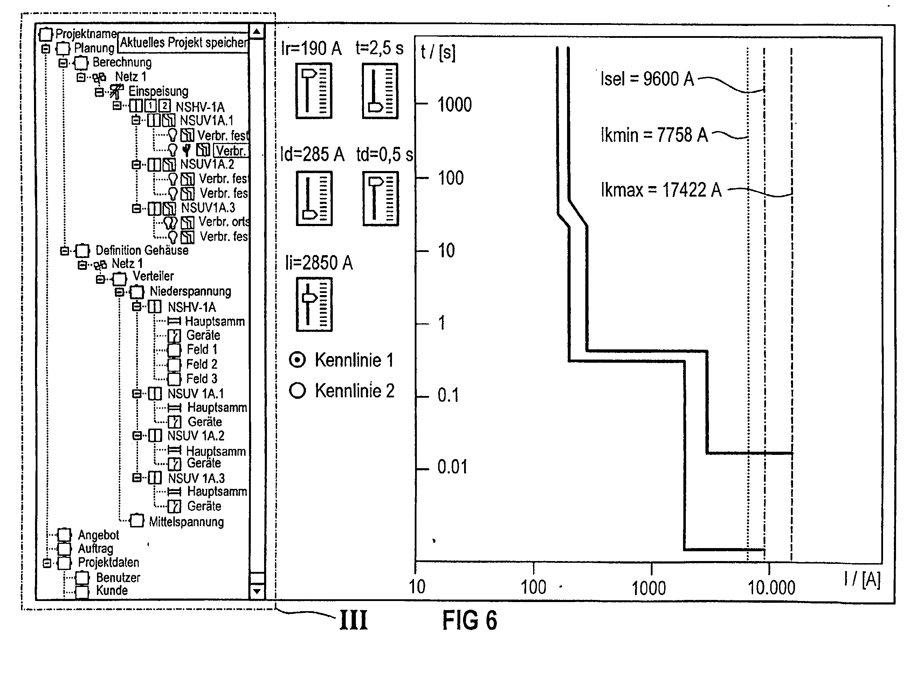

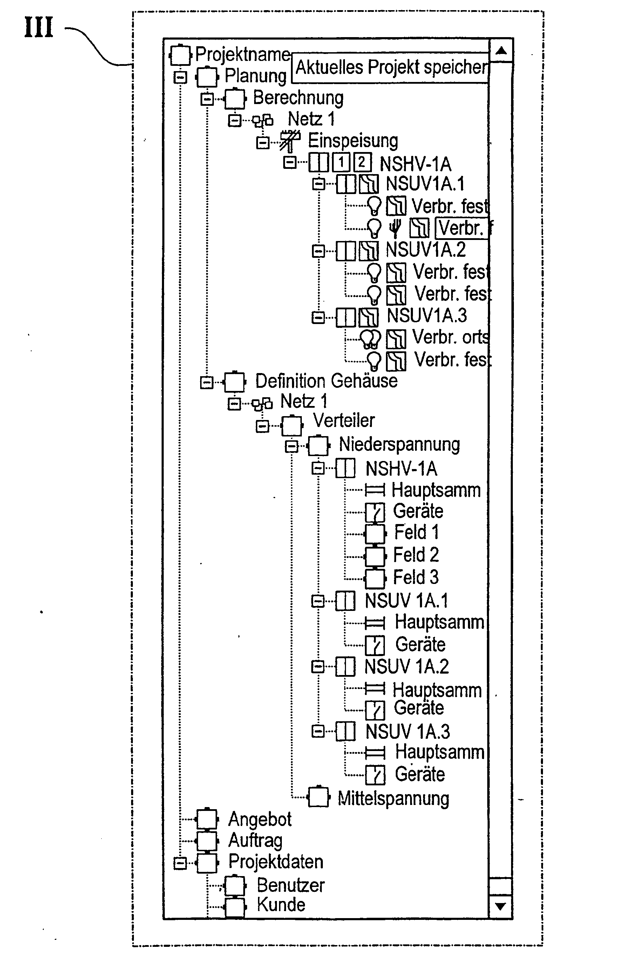

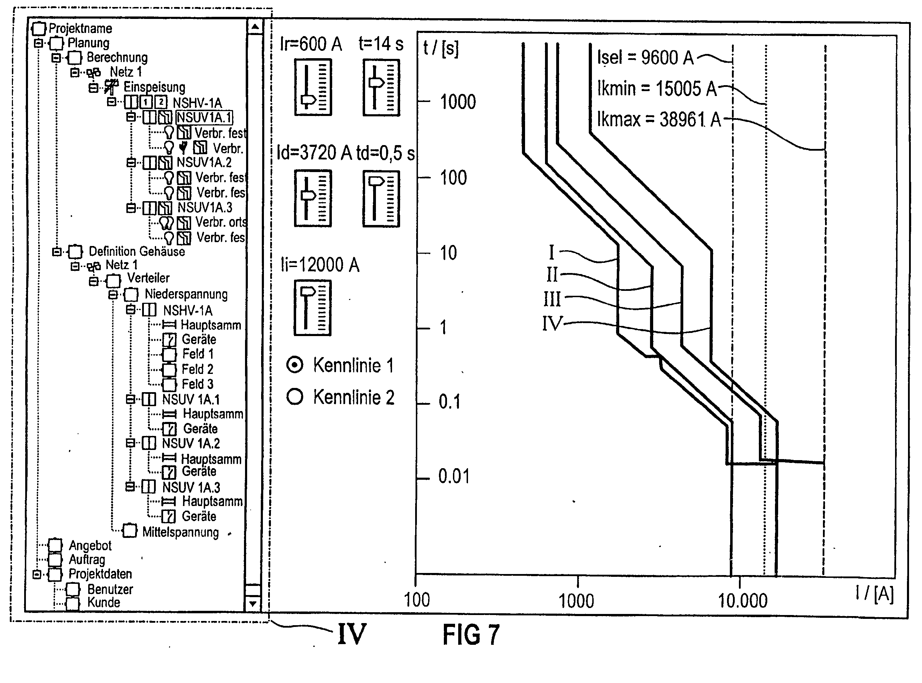

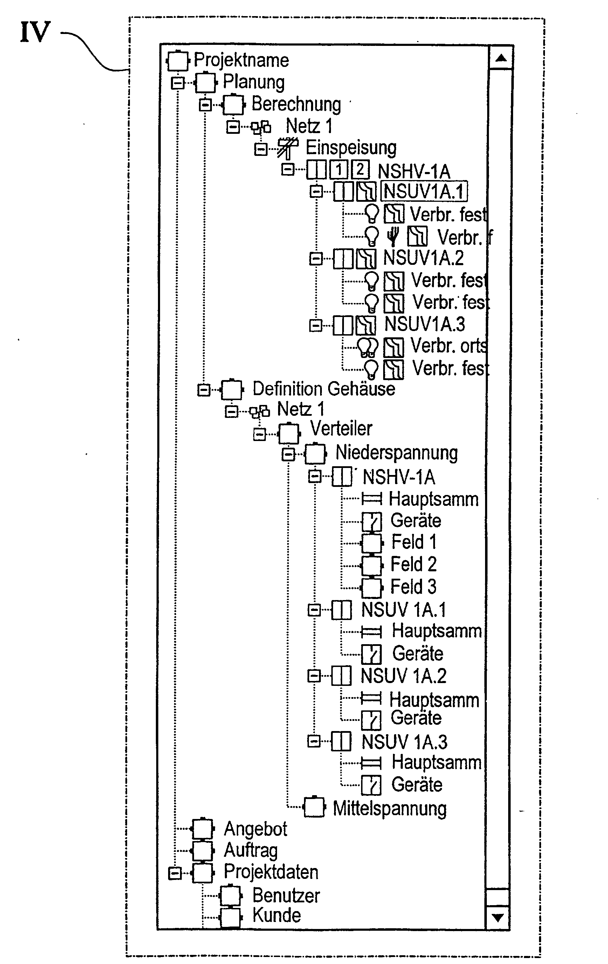

### Selektivitätsbetrachtung (FIG 6 und 7)

Für die elektrische Energieversorgung in Gebäuden ist es erforderlich, das selektive Verhalten von Überlast- und Kurzschlussschutzeinrichtungen nachzuweisen. Werden notwendige Sicherheitseinrichtungen im Gebäude versorgt, wie Sicherheitsbeleuchtung, Feuerwehraufzüge, Löschwasserpumpen usw., besteht aufgrund von nationalen, europäischen und internationalen Errichtungs- und Bauvorschriften sogar die Nachweispflicht. Ändert man jedoch die Schalt- und Schutzgeräte in einem Stromkreis um ein selektives Verhalten zu erreichen so hat dies einen Einfluss auf die andren Betriebsmittel in einem Stromkreis wie Kabel, Leitungen, Stromschienen usw.

Bisher erfolgte der Selektivitätsnachweis entweder über die zeichnerische Darstellung der mittleren Stromzeitkennlinien (FIG 6 und 7) der Schalt- und Schutzgräte auf doppelt-logarithmischem Papier für den Auslöse-Zeitbereich größer 100 ms oder über die Auswertung von Selektivitäts-Grenzwert-Tabellen der Hersteller. Dies erfordert einen hohen Zeitaufwand, da jede vor- bzw. nachgeordnete Schalt- und Schutzgerätekombination (Betrachtung von je zwei Geräten) dargestellt bzw. bewertet werden muss. Auch der Einsatz von modernen Software-Programmen die die zeichnerische Darstellung auf doppelt-logarithmischem Papier übernahmen verringerte den Aufwand nicht wesentlich, da keine direkte Verknüpfung mit den Berechnungsprogrammen für Kurzschluss und Lastfluss bestanden.

Das Programm spezifiziert automatisch den Stromkreisbaum mit den verwendeten Schalt- und Schutzgeräten. Es übernimmt aus der Stromkreisdimensionierung die relevanten Netzdaten für die Bestimmung der richtigen Schutzeinstellung und stellt sie in einem Strom-Zeit-Diagramm (siehe Beispiele gemäß FIG 6 und 7) dar.

Aufgrund der Einstelldaten der einzelnen Kennlinienabschnitte (Überlast-, kurzzeitverzögert und nichtverzögert) sowie der vom Hersteller angegebenen oberen und unteren Toleranzbänder (aus der Datenbank) setzt das Programm das Toleranzband der Schutzauslösung des jeweiligen Schutzgerätes selbständig automatisch zusammen. Vom Programm automatisch berechnete Schnittpunkte der Kennlinien von vor- bzw. nachgeordneten Schalt- und Schutzgeräten bestimmen die Selektivitätsgrenze. Liegt die Selektivitätsgrenze im Bereich "nichtverzögert" (Kurzschluss-Schnellauslöser) werden zusätzlich die Selektivitätsgrenzwerttabellen des Herstellers für die Festlegung der Selektivitätsgrenzen herangezogen.

Die vom Programm ermittelten Einstellwerte können vom Anwender verändert werden. Hierzu sind in der Datenbank die tatsächlichen Einstellstufen der einzelnen Schalt- und Schutzgeräte hinterlegt. Die Einstellung erfolgt dann im mittleren Teil des Bildes mit sogenannten Soft-buttons.

Gleichzeitig werden im Stromzeitdiagramm die Summentoleranzbänder der vor- bzw. nachgeschalteten Schutzeinrichtungen dargestellt. Für den betrachteten Abzweig ist somit direkt sichtbar, ob selektives Verhalten vorliegt, ohne jede mögliche Kombination von Schalt- und Schutzgeräten einzeln zu betrachten.

Werden Einstelldaten gewählt, die dazu führen, dass die verwendeten Betriebsmittel entweder bei Maximal-Belastung des Stromkreises oder bei Kurzschluss unzulässig hoch belastet werden oder Fehlauslösungen zu erwarten sind werden, diese sofort also zur Laufzeit "ROT" angezeigt.

Durch dieses Verfahren hat der Projekteur folgende Vorteile:
- wesentlich kürzere Projektierungsdauer (Zeit- und Kostenvorteil)
- genaueres Ergebnis da mit tatsächlichen möglichen Einstellstufen gearbeitet wird
- Einfuß auf die Auswahl der Betriebsmittel wie Kabel, Leitungen usw. und auf die Selektivität wird direkt automatisch angezeigt.
- Fehlermeldungen werden automatisch in die Netzberechnung übernommen

Durch den Einsatz dieses Tools ist bei stark reduziertem, vertretbarem Aufwand sichergestellt, dass ein selektives Verhalten der Schutzeinrichtungen gewährleistet ist. Dies führt letztendlich auch zu sicheren Energieversorgungsanlagen in der Gebäudetechnik.

Ein weiterer Vorteil des Verfahrens liegt in der Verwendung geeigneter Softwarealgorithmen und Verfahrensabschnitte für
- die Erzeugung der richtigen toleranzabhängigen Auslösekurven
- das Erzeugen der Summentoleranz-Auslösekurven von mehreren vor- bzw. nachgeordneten Schalt- und Schutzgeräten
- das Berechnen der richtigen Schnittpunkte der Auslösekurven.

Durch eine geeigneten Datenhaltung ist die obige Funktionalität gewährleistet, wobei während der Laufzeit des Programms eine Überwachung der.Selektivität bzw. Teilselektivität erfolgt. Veränderungen werden online verarbeitet.

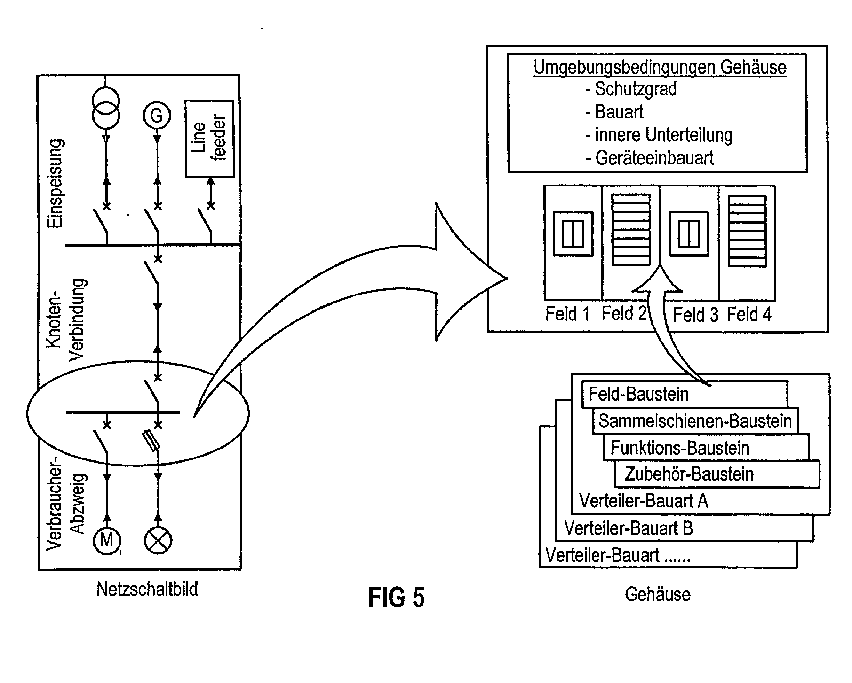

### Gehäusebestimmung (siehe hierzu FIG 5)

Der Planer von Elektro-Energieanlagen für Gebäude muss schon zu einem sehr frühen Planungszeitpunkt Angaben zum benötigten Platzbedarf für Verteilungen, Transformatoren, Generatoren und Energie-Übertragungstrassen machen. Ihm fehlen in der Regel die speziellen Kenntnisse zum Bau von Verteilungsanlagen, zu Erwärmungsproblemen in bestimmten Verteilern usw.

Aufgabe ist es dabei, Angaben zu den Verteilern zu erhalten, die ihre Größe, ihr Gewicht und die Schätzkosten in Abhängigkeit von den gewünschten Eigenschaften der Verteiler und den benötigten Raumbedarf bestimmen.

Bisher wird bei der Projektierung in der Regel auf vorhandene Anlagen oder auf Anlagenteile von ausgeführten Projekte zurückgegriffen. Hierzu werden typische Ausführungsbeispiele in Papierform oder in Form von z.B. DXF-Grafiken gespeichert und ausgewertet.
Dies führt zu einem hohen Zeitaufwand, da abhängig von den bestimmten Betriebmitteln die benötigten Felder ausgesucht und ggf. abgeändert werden müssen.
Außerdem kann eine solche Projektierung nur von Spezialisten vorgenommen werden.

Ähnlich wie bei der Bestimmung der Betriebsmittel wurde auch hier eine Strukturierung vorgenommen, damit
1. Die Bedienung einfach durchgeführt werden kann (immer gleiches Schema)
2. Unterschiedliche Verteiler möglichst automatisch bestimmt werden können.

Die Betriebsmittel (Schalt- und Schutzgeräte) aus der Dimensionierung der Stromkreise werden, einschließlich ihrer Eigenschaften, in die Gehäusedefinition übernommen. Aus der Datenbank Verteiler werden die Funktionsbausteine für den Einbau der Schalt- und Schutzgeräte ermittelt. Alle Verteiler die für die Schalt- und Schutzgeräte einen Funktionsbaustein haben werden automatisch mit ihren Eigenschaften zur Auswahl bereitgestellt.

Durch Einschränkung der zulässigen Eigenschaften wie Schutzklasse, Farbe, Art der Inneren Unterteilung usw. können die zur Auswahl zulässigen Verteiler eingeschränkt werden. Dem Nutzer wird damit ein Werkzeug an die Hand gegeben welches ihm erlaubt, aufgrund von allgemeinen Verteilereigenschaften in kürzester Zeit den Verteiler zu bestimmen, der seinen Anforderungen genügt.

Eine Front- und Draufsicht des Verteilers wird automatisch erzeugt und steht für die weitere Nutzung, zum Beispiel in CAD- Programmen, zur Verfügung. Gleichzeitig wird eine allgemeine Beschreibung der Verteiler, der einzubauenden Schalt- und Schutzgeräte sowie ein Schätzpreis ermittelt.

Bei der Bestimmung wird berücksichtigt, dass die Schalt- und Schutzgräte nur eine reduzierte Stromtragfähigkeit nach dem Einbau in einen Verteiler haben. Dies führt zu einer ausreichenden Bestimmung der Schalt- und Schutzgeräte.

Der Kernvorteil des neuen Verfahrens in Hinblick auf die Gehäusebestimmung liegt in der Entwicklung von Klassen, Unterklassen usw., die durch Eigenschaften beschrieben werden können, die ein Planer oder ein Errichter einer Schaltanlage versteht. Hinzu kommt der Einsatz von Auswahlalgorithmen, die die vom Dimensionierungstool des Verfahrens bestimmten Schalt- und Schutzgeräte über Ihre Eigenschaften wie Bemessungsstrom, Belastungsstrom, Polzahl, Kurzschlusseinschaltvermögen, Kurzschlusseinschaltvermögen, Antriebsart, Einbauart, usw. einem bestimmten Feld und Anlagentyp zuordnen.

Selbstverständlich sind die einzeln beschriebenen Verfahrenschritte und Details des neuen Verfahrens und der mit einem PC realisierten Vorrichtung miteinander kombinierbar, ohne dass der Grundgedanke der vorliegenden Idee verlassen wird. Wesentlich dabei ist, dass die bisher aufwendige und nicht unbedingt systematische Projektierung von Anlagen nunmehr automatisch mit einem hohen Grad an Benutzerfreundlichkeit durchgeführt werden kann.

## Patentansprüche

1. Verfahren zur Projektierung einer elektrischen Anlage mit einem Netz, das von einer Einspeisungsseite zu einer Verbraucherseite reicht, **dadurch gekenneichnet,** dass ein Netzbild ermittelt wird entweder durch
- Ermitteln eines Einspeisestromkreises anhand von Vorgaben für elektrische Mittel, der zur Verfügung stehenden Leistung und der Stromkreislänge und durch
- Ermitteln eines Verbraucherstromkreises anhand von Vorgaben für vorgesehene Last und der Stromkreislänge oder durch
- Ermitteln eines Verbraucherstromkreises anhand von Vorgaben für vorgesehene Last und der Stromkreislänge und durch
- Ermitteln eines Einspeisekreises anhand der Stromkreislänge und anhand von Ergebnissen aus Algorithmen und den Vorgaben zum Verbraucherstromkreis,
- wobei jeweils Einspeisestromkreis und Verbraucherstromkreis an einer virtuellen Schnittstelle gekoppelt sind.

2. Verfahren nach Anspruch 1, **dadurch gekennzeichnet, dass** sich an der virtuellen Schnittstelle eine Unterverteilung zwischenschalten lässt, wobei zu den Vorgaben bzw. zu den Ergebnissen zum Einspeisestromkreis eine Eingabe für die Stromkreislänge der Unterverteilung vorgesehen ist.

3. Verfahren nach Anspruch 1 oder 2, **dadurch ge-kennzeichnet**, dass zu jedem Stromkreis, auch zu parallelen Zweigen im Einspeisestromkreis und bzw. oder im Verbraucherstromkreis, ausgehend von der Summe der Lasten bis zum betrachteten Stromkreis durchgeführt wird:
a) - Die Ermittlung von Einrichtungen und/oder Schutzmaßnahmen zur Gewinnung von Überlastungssicherheit anhand der Summenlast und vorgegebener Tabellen und Algorithmen sowie anhand von Auswahltabellen zur Bestimmung geeigneter Geräte;
b) - die Ermittlung von Einrichtungen und/oder Schutzmaßnahmen zur Gewinnung von Kurzschluss-Schutz zu Kurzschluss-Strömen, die zum Ergebnis nach a) anhand von Algorithmen gewonnen werden;
c) - die Ermittlung von Einrichtungen und/oder Maßnahmen zum Schutz von Lebewesen gegen den elektrischen Schlag bei indirektem Berühren anhand von Ergebnissen von a) und b) und anhand von Tabellen und bzw. von Algorithmen,
d) - die Ermittlung von Leistungsquerschnitt und/oder von parallelen Leitern anhand der Bewertung von Leitungslänge anhand der Ergebnisse nach a) bis c) von einer betrachteten Leitungsstelle bis zu einer betrachteten Last unter dem Betrachtungsmaßstab, dass an der Last aufgrund des Spannungsfalls eine Spannung für ordnungsgemäßen Betrieb der Last ansteht,
e) - für den Fall, dass zwei oder mehr Schutzeinrichtungen in Reihe vorgesehen sind, die Ermittlung von Einrichtungen, die selektives Verhalten zueinander aufweisen, anhand der Ergebnisse nach a) bis d) und anhand von Auswahltabellen, falls die Schutzschalteinrichtungen den Selektivitäts-Anforderungen nicht genügt haben,
f) - Erzeugen des Netzbildes anhand der kumulierten Ergebnisse nach a) bis e).

4. Verfahren nach einem der Ansprüche 1 bis 3, **dadurch gekennzeichnet, dass** zu zwei oder mehr parallel angeordneten Schutzeinrichtungen in Reihe zu vor- oder nachgeschalteten Schutzeinrichtungen eine Hüllkurve um die Auslösekurven der parallel angeordneten Schutzeinrichtungen erzeugt wird und diese Kurven visualisiert werden.

5. Verfahren nach Anspruch 4, **dadurch gekennzeichnet, dass** anhand vorgebbarer Werte Einstellparameter der Schutzeinrichtungen verändert und die resultierenden Auslösekurven online visualisiert werden.

6. Verfahren nach Anspruch 5, **dadurch gekennzeichnet, dass** die Einstellparameter der Schutzeinrichtungen an einer Schnittstelle für eine Ausgabe an die jeweiligen Schutzgeräte bereitgestellt werden.

7. Verfahren nach einem der Ansprüche 1 bis 6, **dadurch gekennzeichnet, dass** das Netzbild nach Art einer Baumstruktur visualisiert wird.

8. Verfahren nach einem der Ansprüche 1 bis 7, **dadurch gekennzeichnet, dass** zur Gewinnung von Gehäusen von Unterverteilungen zur Aufnahme ermittelter Geräte und Einrichtungen aufgeteilt wird, in den Raum für
- Hauptanschluss-Schienen,
- Zubehör (Messgeräte, Schaltplantaschen),
- Funktionsbausteine zu jedem verwendbaren Gerät, im wesentlichen bestehend aus einem Einbausatz, um ein spezielles Gerät einbauen zu können, aus Klemmen und erforderlichenfalls aus Zwischenschienen und
- für das Gehäuse.

9. Verfahren nach Anspruch 8, **dadurch gekennzeichnet, dass** zu ermittelten Geräten und Einrichtungen eine Aufteilung des zugeordnet ermittelten Raumes auf sogenannte Felder in Gestalt von Verteilungen oder Schaltschränken erfolgt.

10. Projektierungsvorrichtung zur Durchführung des Verfahrens nach einem der Ansprüche 1 bis 9, mit einem Rechner, einem Bildschirm, einer Tastatur und ggf. einer Schnittstelle, und einem Speicher, in welchem eine Vielzahl von virtuellen Einrichtungen, Geräten und Schutzeinrichtungen in Tabellen mit ihren Kenndaten gespeichert sind, und einem Generator, welcher aus den ermittelten Einrichtungen, Geräten und Schutzeinrichtungen das Netzbild erzeugt.

## Claims

1. Method for configuring an electrical installation having a network which extends from a feed side to a load side, **characterized in that** a network map is determined either by
- determining a feed circuit on the basis of presets for electrical means, the available power and the circuit length, and by
- determining a load circuit on the basis of presets for an intended load and the circuit length or by
- determining a load circuit on the basis of presets for an intended load and the circuit length and by
- determining a feed circuit on the basis of the circuit length and using the results from algorithms and the presets for the load circuit,
- with the feed circuit and the load circuit in each case being coupled to a virtual interface.

2. Method according to claim 1, **characterized in that** a secondary distribution panel can be connected in-between at the virtual interface, with an input for the circuit length of the secondary distribution panel being provided for the presets and/or for the results relating to the feed circuit.

3. Method according to claim 1 or 2, **characterized in that**, the following processes are carried out for each circuit, as well as for parallel branches in the feed circuit and/or in the load circuit, based on the sum of the loads as far as the circuit under consideration:
a) - The determination of devices and/or protective measures for obtaining overload safety on the basis of the total load and predetermined tables and algorithms, as well as on the basis of selection tables for establishing suitable appliances;
b) - the determination of devices and/or protective measures for obtaining short-circuit protection for short-circuit currents which are obtained on the basis of algorithms from the results according to a);
c) - the determination of devices and/or measures for protection of life against electric shocks in the case of indirect contact, on the basis of the results from a) and b) and on the basis of tables and/or of algorithms,
d) - the determination of the power cross section and/or of parallel conductors on the basis of the assessment of cable lengths on the basis of the results according to a) to c) from a cable point under consideration to a load under consideration using the consideration measure that a voltage for correct operation of the load is present across the load, on the basis of the voltage drop,
e) - for the situation where two or more protective devices are provided in series, the determination of devices which have a selective response with respect to one another, on the basis of the results according to a) to d) and on the basis of selection tables, if the protective switching devices have not satisfied the selectivity requirements,
f) - production of the network map on the basis of the accumulated results according to a) to e).

4. Method according to one of claims 1 to 3, **characterized in that**, an envelope curve is produced for protective devices which are connected in series upstream or downstream of two or more parallel-arranged protective devices, around the tripping curves of the parallel-arranged protective devices, and these curves are visualized.

5. Method according to claim 4, **characterized in that** setting parameters for the protective devices are changed on the basis of values which can be predetermined, and the resultant tripping curves are visualized online.

6. Method according to claim 5, **characterized in that** the setting parameters for the protective devices are produced at an interface for an output to the respective protective devices.

7. Method according to one of claims 1 to 6, **characterized in that** the network map is visualized in the form of a tree structure.

8. Method according to one of claims 1 to 7, **characterized in that**, in order to obtain housings for secondary distribution panels for accommodating determined appliances and devices, [lacuna] is subdivided into space for
- main connecting rails,
- accessories (test equipment, circuit diagram pockets),
- functional modules for each appliance which can be used, essentially comprising an installation kit, in order to allow a specific appliance to be installed, comprising terminals and, if necessary, intermediate rails, and
- for the housing.

9. Method according to claim 8, **characterized in that**, for determined appliances and devices, the associated determined space is split into so-called fields in the form of distribution panels or switchgear cabinets.

10. Configuration apparatus for carrying out the method according to one of claims 1 to 9, having a computer, a screen, a keyboard and possibly an interface, and having a memory in which a large number of virtual devices, appliances and protective devices are stored with their characteristic data in tables, and having a generator which uses the determined devices, appliances and protective devices to produce the network map.

## Revendications

1. Procédé de développement d'une installation électrique ayant un réseau qui va d'un côté d'alimentation à un côté de consommation, **caractérisé par le fait que** l'on détermine un schéma de réseau :
- soit par détermination d'un circuit de courant d'alimentation à l'aide de données prescrites pour des moyens électriques, de la puissance disponible et de la longueur de circuit de courant, et
- par détermination d'un circuit de courant de consommation à l'aide de données prescrites pour une charge prévue et de la longueur de circuit de courant,
- soit par détermination d'un circuit de courant de consommation à l'aide de données prescrites pour une charge prévue et de la longueur de circuit de courant, et
- par détermination d'un circuit de courant d'alimentation à l'aide de la longueur de circuit de courant, de résultats d'algorithmes et des données prescrites pour le circuit de courant de consommation,
- le circuit de courant d'alimentation et le circuit de courant de consommation étant couplés à une interface virtuelle.

2. Procédé selon la revendication 1, **caractérisé par le fait qu'**une distribution secondaire peut être intercalée au niveau de l'interface virtuelle, une entrée pour la longueur de circuit de courant de la distribution secondaire étant prévue pour les données prescrites respectivement pour les résultats concernant le circuit de courant d'alimentation.

3. Procédé selon la revendication 1 ou 2, **caractérisé par le fait que**, pour chaque circuit de courant, même pour des branches parallèles dans le circuit de courant d'alimentation et/ou dans le circuit de courant de consommation, on effectue à partir de la somme des charges jusqu'au circuit de courant considéré :
a) - la détermination de dispositifs et/ou de mesures de protection pour obtenir une sécurité en cas de surcharge à l'aide de la charge cumulée et de tableaux et algorithmes prescrits ainsi qu'à l'aide de tableaux de sélection pour la détermination d'appareils appropriés ;
b) - la détermination de dispositifs et/ou de mesures de protection pour obtenir une protection en cas de court-circuit pour des courants de court-circuit qui sont obtenus en résultat de a) à l'aide d'algorithmes ;
c) - la détermination de dispositifs et/ou de mesures de protection d'êtres vivants contre un choc électrique en cas de contact indirect à l'aide de résultats de a) et b) et à l'aide de tableaux et/ou d'algorithmes ;
d) - la détermination d'une section transversale de puissance et/ou de conducteurs parallèles à l'aide de l'évaluation d'une longueur de ligne à l'aide des résultats de a) à c) d'un point de ligne considéré à une charge considérée en considérant qu'il existe sur la charge, en raison de la chute de tension, une tension pour le fonctionnement normal de la charge ;
e) - si deux ou plus dispositifs de protection sont prévus en série, la détermination de dispositifs ayant chacun un comportement sélectif les uns par rapport aux autres, à l'aide des résultats de a) à d) et à l'aide de tableaux de sélection, si les dispositifs de commutation de protection n'ont pas satisfait aux conditions de sélectivité ;
f) - la production du schéma de réseau à l'aide des résultats cumulés de a) à e).

4. Procédé selon l'une des revendications 1 à 3, **caractérisé par le fait que**, pour deux ou plus dispositifs de protection montés en parallèle puis en série avec des dispositifs de protection montés du côté amont ou du côté aval, on produit une enveloppante autour des courbes de déclenchement des dispositifs de protection montés en parallèle et on visualise ces courbes.

5. Procédé selon la revendication 4, **caractérisé par le fait que**, à l'aide de valeurs pouvant être prescrites, on modifie des paramètres de réglage des dispositifs de protection et on visualise directement en ligne les courbes de déclenchement résultantes.

6. Procédé selon la revendication 5, **caractérisé par le fait que** l'on met à disposition les paramètres de réglage des dispositifs de protection à une interface pour une sortie vers les appareils de protection respectifs.

7. Procédé selon l'une des revendications 1 à 6, **caractérisé par le fait que** l'on visualise le schéma de réseau à la manière d'une structure arborescente.

8. Procédé selon l'une des revendications 1 à 7, **caractérisé par le fait que**, pour obtenir des boîtiers de distributions secondaires pour le logement d'appareils et dispositifs déterminés, on divise l'espace pour les éléments suivants :
- barres de bornes de raccordement principal,
- accessoires (appareils de mesure, compartiments pour plans de montage),
- modules fonctionnels pour chaque appareil utilisable, constitué essentiellement d'un lot d'encastrement, pour pouvoir encastrer un appareil spécial, de bornes et si nécessaire de barres intermédiaires, et
- boîtier.

9. Procédé selon la revendication 8, **caractérisé par le fait que**, pour des appareils et dispositifs déterminés, on effectue une division de l'espace déterminé associé en des champs sous forme d'armoires de distribution ou de commutation.

10. Système de développement pour la mise en oeuvre du procédé selon l'une des revendications 1 à 9, comportant un ordinateur, un écran, un clavier, éventuellement une interface, une mémoire dans laquelle des dispositifs, appareils et dispositifs de protection virtuels sont mémorisés dans des tableaux avec leurs données caractéristiques et un générateur qui produit le schéma de réseau à partir des dispositifs, appareils et dispositifs de protection déterminés.
